# EUROPEAN PATENT SPECIFICATION

(11) **EP 2 062 514 B1**
(45) Date of publication and mention of the grant of the patent: **07.01.2015**
(21) Application number: 07022480.3
(22) Date of filing: 20.11.2007
(51) Int. Cl.: A47J 36/38, A47J 37/06

(54) **Apparatus for cooking food products on both sides thereof**
Vorrichtung zum beidseitigen Kochen von Lebensmitteln
Appareil de cuisson d'aliments des deux côtés de celui-ci

(43) Date of publication of application: 27.05.2009
(73) Proprietor: ELECTROLUX PROFESSIONAL S.p.A., 33170 Pordenone (IT)
(72) Inventor: Tassan Mangina, Franco, 33080- Marsure (PN) (IT); Fadelli, Marino, 31014- Colle Umberto (TV) (IT); Sinatra, Fabio, 33052-Cervignano (UD) (IT); Ulian, Marco, 33050- Fiumicello (UD) (IT); Menosso, Erika, 33083-Chions (PN) (IT); Raus, Dragan, 33080 - Porcia (PN) (IT); Morassut, Alessandro, 33077 - Sacile (PN) (IT)
(74) Representative: Markovina, Paolo

(56) References cited:
- US-A- 4 034 663
- US-A1- 2002 117 165
- US-A1- 2006 191 895

## Description

The present invention refers to an apparatus used to cook food products on both sides thereof.

Widely known in the art are currently broilers, or griddles, that are used to cook food products of the most varied kind, such as hamburgers, toasted rolls, meat in general, and the like. These griddles use contact heating or infrared radiation as a process to cook such products. The heating surfaces are made of chromium-plated steel, stainless steel, Teflon-coated steel or glass-ceramics. A number of griddles to be found currently on the marketplace have - further to a lower or bottom heating element on which the products to be cooked are placed - an upper or top heating element that is adapted to be brought in proximity of the lower or bottom one so as to have the products cooked on both sides simultaneously, thereby reducing the overall time required to handle the same products.

The cooking process produces a lot of fumes and odours that usually are sucked by a fume extraction device or hood installed over the griddles in order to remove air laden with fumes and steam away from the griddles.

The circulating-air hoods are adapted to collect cooking effluent arising during cooking, filter it and return it to the room where the griddles apparatus is placed.

The waste air hoods are adapted to collect the fumes, filter it and convey it outside into the open.

A drawback encountered with prior-art apparatuses of the above-cited kind lies in the fact that a fume extraction device or hood needs to be installed over the griddles to suck the fumes thereby removing them.

These fume extraction devices are very expensive, bulky and cumbersome, they need a lot of space to be installed, and the installation is time-comsuming.

US 2002/0117165 discloses a grill having top and bottom cooking surfaces with the top cooking surface movable upward to load the grill with food and movable downward onto the food and bottom surface to cook the food. The grill has a venting system that discourages smoke and vapors from leaving the grill to permeate the air in the cooking room. The venting system includes several vent tubes placed about the periphery of the top member of the grill. Individual vent tubes on each side of the grill feed into a larger tube. Four larger tubes feed into a main exhaust tube that has a fan inside to create suction in the several vent tubes.

According to the present invention, this aim, along with further ones that will become apparent from the following disclosure, is reached in an apparatus for cooking food products on both sides incorporating the features and characteristics as defined and recited in the claims appended hereto.

Features and advantages of the present invention will anyway be more readily understood from the description that is given below by way of nonlimiting example with reference to the accompanying drawings, in which:
- Figure 1 is a lateral sectional view of a food cooking apparatus according to the present invention, represented with its upper member raised in the resting, i.e. inoperative position thereof;
- Figure 2 is a lateral sectional view of the apparatus of figure 1, represented with the upper member lowered into the cooking position thereof;

- Figure 3 and 4 are lateral sectional views of a food cooking apparatus according to a further embodiment the present invention, as represented with its upper member raised in the inoperative position thereof and lowered in the cooking position thereof, respectively;
- Figure 5 is a lateral sectional view of a further embodiment of the present invention, as represented with the upper member lowered into the cooking position thereof;

- Figure 6 and 7 are lateral sectional views of the apparatus according to the present invention showing the intake port provided at a front edge of the upper member (only a portion of the suction line is depicted for sake of clarity) and showing the moving coupling, as represented with its upper member raised in the inoperative position thereof and lowered in the cooking position thereof, respectively;
- Figure 8 and 9 are lateral sectional views of the apparatus according to the present invention showing the intake port provided at a front edge of the upper member (only a portion of the suction line is depicted for sake of clarity) and showing a further embodiment of the moving coupling; as represented with its upper member raised in the inoperative position thereof and lowered in the cooking position thereof, respectively;
- Figure 10 is a lateral sectional view of the apparatus having the intake port provided at a front edge of the upper member and including a further embodiment of the moving coupling;
- Figure 11 is a view similar to figure 10, the apparatus being in open position.
- Figure 12 is a lateral sectional view of the apparatus having the intake port fluidly connected to the cooking chamber and including the moving coupling of figure 10;
- Figure 13 is a view similar to figure 12, the apparatus being in open position.

With reference to the above-cited Figures, the apparatus for cooking food products on both sides thereof, as generally indicated with the reference numeral 1, comprises a base member 2 associated to a first heating surface 3 adapted to support food products 4 to be cooked, an upper member 5 associated to a second heating surface 6 and movable relative to said base member 2 so that, when the upper member 5 is displaced towards the base member 2, the second heating surface 6 comes to lie opposite to the first heating surface 3 so as to enclose the food products 4 therebetween.

The apparatus comprises at least a suction line 7 adapted to collect the fumes arising during cooking.

The base member 2 comprises the first heating surface 3 arranged on a top portion the same base member 2, the power-supply unit of the apparatus, electronic control panel for the different cooking programmes to be set in accordance to the food products to be handled and the related control electronics.

In a preferred embodiment of the present invention, a first heating device 8 is housed within the base member 2 and arranged under the first heating surface 3 for heating the latter, which is made of a material resistant to high temperatures (glass ceramic or aluminium or iron or cast-iron plate or the like), so that the heat produced by such first heating device 8 passes directly on to the food being cooked.

The first heating device 8 can be configured in the form of one or more electric resistor. The resistor is placed underneath and substantially in proximity to the first heating surface 3.

It can be readily appreciated that the first heating device 8 can be provided in the form of electrically conductive layers in contact with the first heating surface 8 and in particular with the bottom face thereof, i.e. the face opposite the one supporting the food products 4.

Advantageously, the first heating surface 3 can be coated with a non-stick layer, for example Teflon, to improve cleanability.

Expediently the base member 2 comprise a partition element 9 made of thermally insulating material (mineral oxides, for example) which is arranged so as to extend in a position below the first heating device 8 for thermally insulating the electric/electronic components housed in the base member 2 from the first heating device 8.

In practise, the partition element 9, which can comprise at least a panel, divides or separates the inside of the base member 2 into a first zone or heating area 10 wherein the first heating device 8 is located and into a second zone or area 11 wherein the electric and electronic components (the power-supply unit, electronic controls) are arranged in order to reduce the heat losses downwards from the heating area 10 and at the same time to convey the heat generated by the first heating device 8 towards the first heating surface 3.

Advantageously, the partition element 9 forms a housing adapted to contain the first heating device 8 and, preferably, the partition element 9 is configured as a box-like container in which the first heating device 8 is arranged. The box-like container comprises a bottom wall, upward-oriented side walls and further, it is open upwards and arranged so that the first heating surface 3 substantially closes the open side of the box-like container. The first heating surface 3 and the box-like container delimit the heating area 10 enclosing the first heating device 8 so as to ensure a thermal protection of the others members and parts of the apparatus mounted therearound against the heat generated by the first heating device 8.

Advantageously, temperature sensors can be provided in contact to the bottom face 3a of the first heating surface 3, i.e. in contact to the face opposite to the one adapted to support the food, for detecting the temperature variations, which are generated by the food when it is placed on the hot food-support surface 3 in order to maintain the cooking temperature.

In fact, since the temperature of the hot first heating surface 3 drops as soon as the food is placed thereupon and the cooking time needs to be very short, the temperature sensors are adapted to quickly detect such temperature variations so that the resistor can be controlled or driven in order to keep the cooking temperature constant.

The upper member 5 is pivotally joined to the base member 2 so that the upper member 5 is movable relative to said base member 2.

When the upper member 5 is lowered or swung towards the base member 2, the second heating surface 6 moves close to the first heating surface 3 supporting the food to be cooked, so as to enclose the latter therebetween.

In a preferred embodiment, the upper member 5 comprises a second heating device 12 arranged behind and in close proximity to the second heating surface 6 for heating the latter, which, as in the case of the first heating surface 3, is made of a material resistant to high temperatures (glass ceramic or aluminium or iron or cast-iron plate or the like), so that the heat produced by such second heating device 12 passes directly on to the food being cooked.

Also the second heating device 12 can be configured as electrically conductive layers arranged on the top face of the second heating surface 6, i.e. the face opposite to the one adapted to directly contact the food.

Advantageously, the second heating surface 6 can be coated with a non-stick layer, for example Teflon, to improve cleanability.

The upper member 5 comprises a handgrip member, by means of which it is possible for the same upper member 5 to be raised and lowered between the open condition and the closed condition as mentioned above.

The kind of movement needed to lower the upper member 5, i.e. the second heating surface 6 onto the first heating surface 3 lying therebelow can for instance be a rotary one about a hinging pin provided on the base member 2 or a simple translational one, or a combination of both. Anyway, these details shall not be explained any further, owing to them being generally and widely known to all those skilled in the art.

The apparatus for cooking food products on both sides thereof, as mentioned above, comprises a suction line 7 for taking in the cooking effluent produced by the food products 3 being cooked.

The suction line 7 comprises at least an intake port 13 provided in or on the apparatus and adapted to suck the cooking fumes.

The suction line 7 can be configured as one or more fluid passage, which the apparatus integrally forms or defines, adapted to convey and direct the fumes taken in through the intake aperture 13 to a suitable discharge unit so that the fumes can be exhausted into the outside atmosphere.

Air circulating devices are fluidly connected to the suction line 7 to cause the cooking fumes to be sucked through the intake port 13 and to be circulated along the suction line 7 and to be eventually exhausted into the atmosphere again.

The emissions can be discharged into the room in which the apparatus is placed (recirculating system), optionally after having passed through a filtering device for removing grease and dirt particles if the nature of the fumes requires a filtration before being discharged. In this case the suction line 7 collets the effluents arising during cooking, so as to render more comfortable for an user to operate the apparatus and to prevent fumes and the particles thereof to contact the control panel of the apparatus, the suction line 7, then, discharges the fumes in a different part of the room.

Alternatively, the fumes can be discharged outside the room where the apparatus is installed, i.e. directly outdoors after being properly filtered.

Further, the apparatus is capable of removing the humidity from the food products via the suction line 7 in order to get them crispier and improve their quality.

The air circulating devices can be configured as a unit completely autonomous from the apparatus and adapted to be connected to the suction line 7 when the apparatus in installed, or they can be provided integrally on the apparatus itself, i.e. the apparatus comprise the air circulating devices

Preferably, the apparatus for cooking food products on both sides thereof comprises an intake fan assembly 14 fluidly connected to the suction line 7.

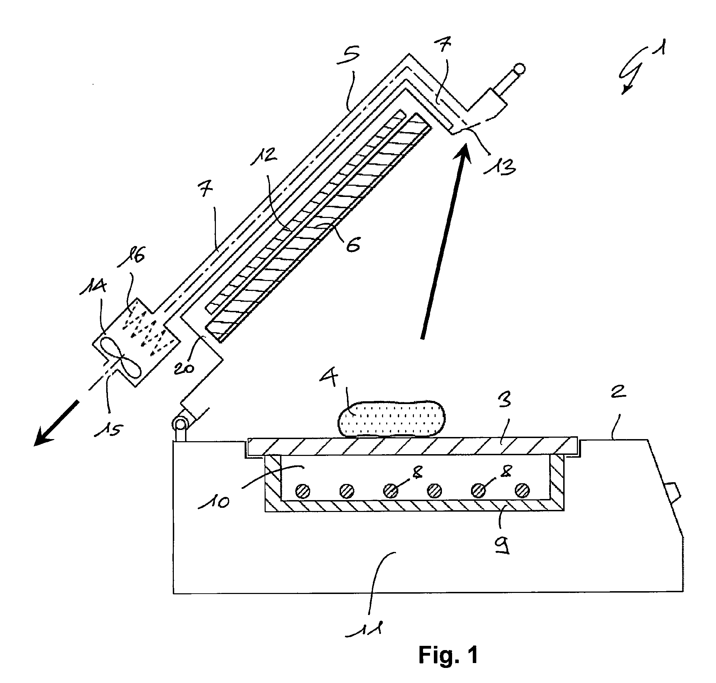

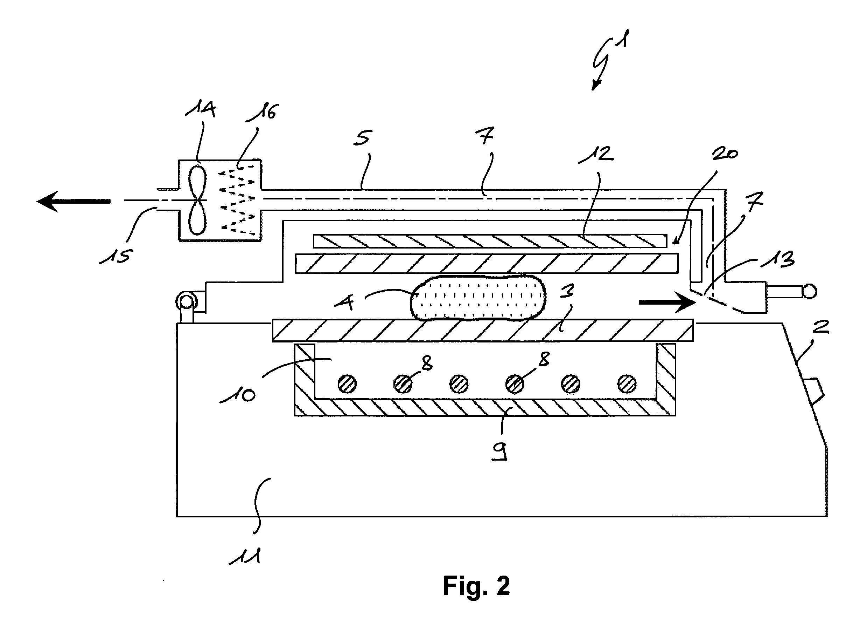

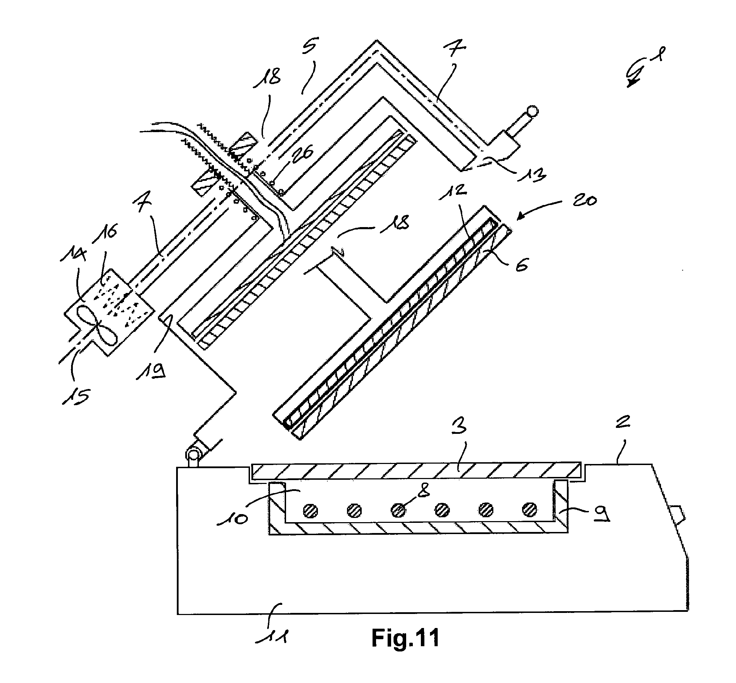

In a preferred embodiment of the present invention, represented in figures 1, 2, 10, 11, the upper member 5 is integrally provided with the fan assembly 14, which is fluidly connected, via the suction line 7, to the intake port 13.

The upper member 5 comprises at a top portion thereof the suction line 7, which can be in a single piece construction with the upper member 5, for connecting the intake port 13 to the fan assembly 14.

In details, the intake port 13 is provided at a front edge of the upper member 5, i.e. the edge opposite to the one movably engaging the base member 2 and adapted to be lowered forwards or lifted from the same base member 5. Preferably, the intake port 13 is configured as a slot extending along the front edge of the upper member.

The intake port 13 is adapted to take in the cooking effluent arising from any portions of the first heating surface 3 and furthermore it is capable of sucking the fumes even if the upper member is substantially lifted from the base member 2.

An outlet port 15 is provided downstream the fan assembly 14 so as to directly discharge the fumes or to convey the fumes to an exhaust line.

Advantageously the apparatus can comprise a filtering device 16 adapted to filter the cooking effluent so as to trap the grease and dirt transported by the effluent. The filtering device 16 can be in the form of a mechanic, catalytic, electrostatic, plasma, activated carbons, or zeolite filter.

The filtering device 16 is preferably arranged upstream the fan assembly 14 between the latter and the suction line 7.

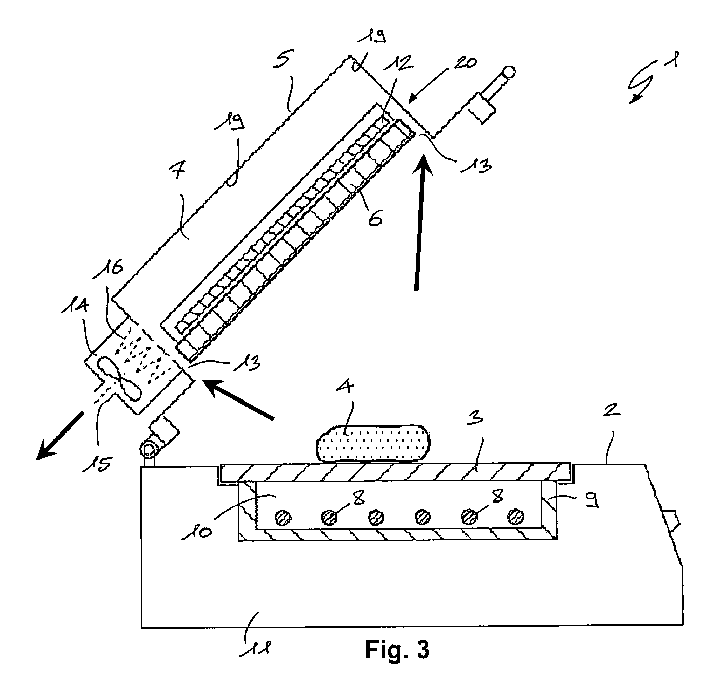

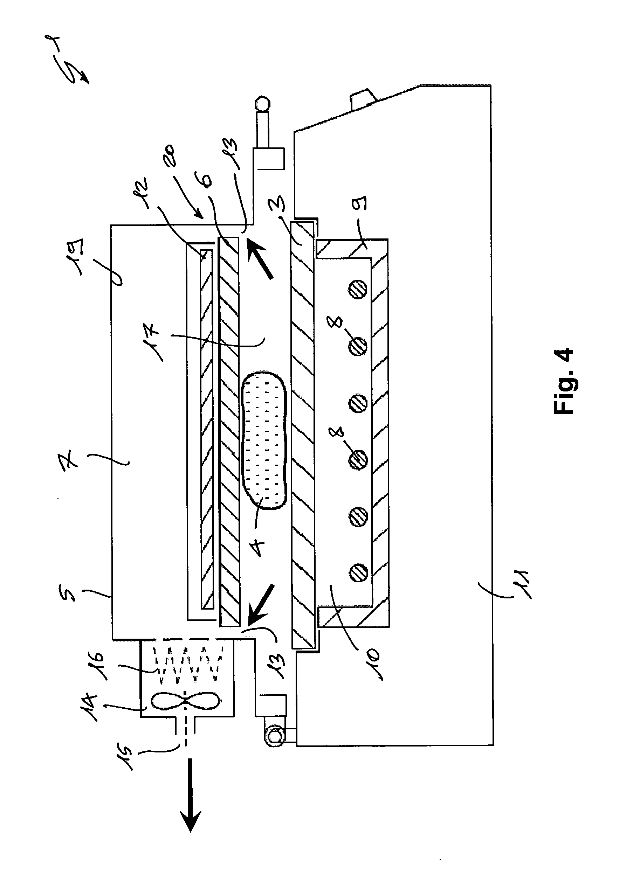

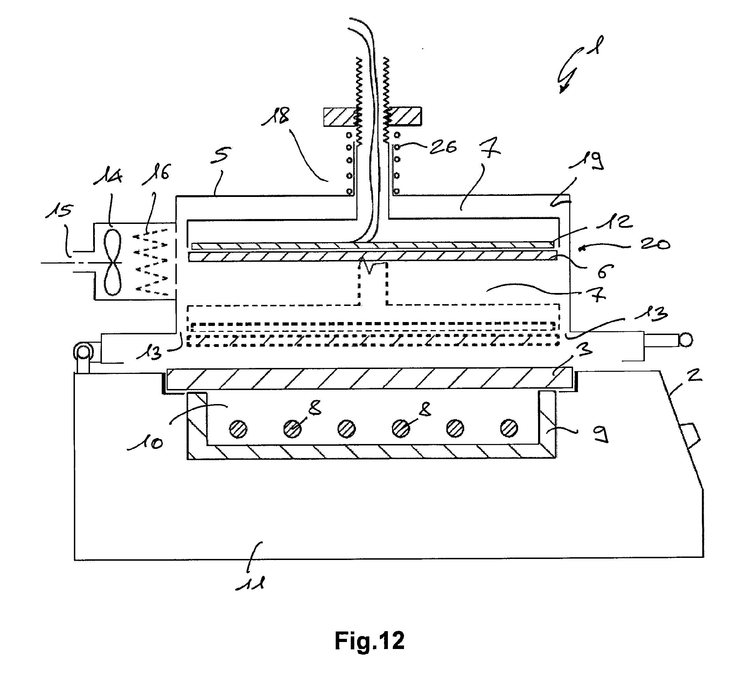

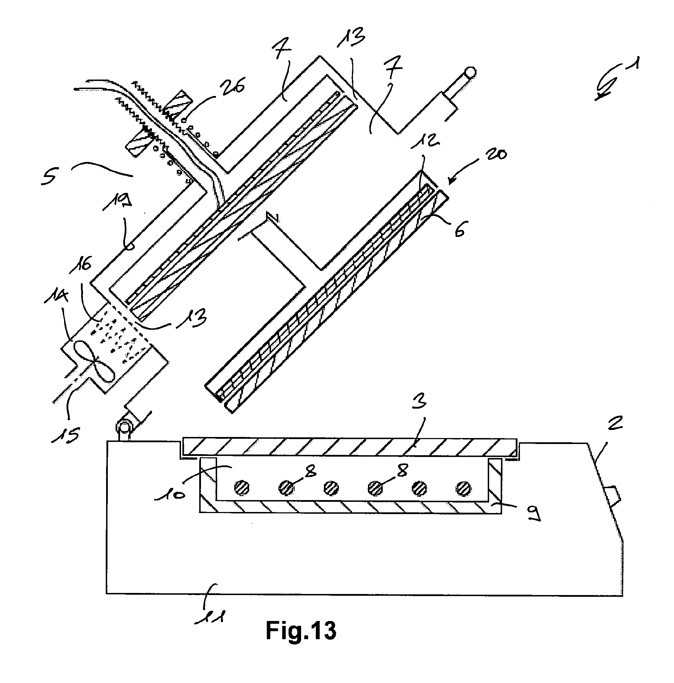

In a further embodiment of the present invention, shown in figures 3, 4, 12, 13, the upper member 5 is movable between an open inoperative condition, in which the first heating surface 3 of the base member 2 is accessible from the outside for the food products to be cooked to be capable of being laid thereupon, and a closed cooking condition, in which the upper member 5 is closed onto the base member 2 so as to define a cooking chamber 17 containing the first and the second heating surface 3, 6 that press food products to be cooked.

The same cooking chamber 17, formed by said base and upper members 2, 5 when closed against each other, is adapted to retain the fumes, odours and cooking effluent produced during cooking therewithin, i.e. prevent them from leaking outside and at the same time the cooking chamber 17 is adapted to convey the fumes to the suction line 7 .

The upper member 5 integrally defines the suction line 7, which is fluidly connected to the cooking chamber 17 via one or more intake port 13. The intake ports 13 are preferably provided along the peripheral edge of the second heating surface 6 to effectively take in the fumes.

Preferably a gap between the upper member 5 and the second heating surface forms the suction line 7.

The intake fan assembly 14 is fluidly connected to the suction line 7 and in particular to the gap forming such suction line 7.

Filtering device 16 can be provided and arranged, for example, upstream the fan assembly 14 between the latter and the suction line 7.

The outlet port 15 is provided downstream the fan assembly 14 so as to directly discharge the fumes or to convey the fumes to an exhaust line.

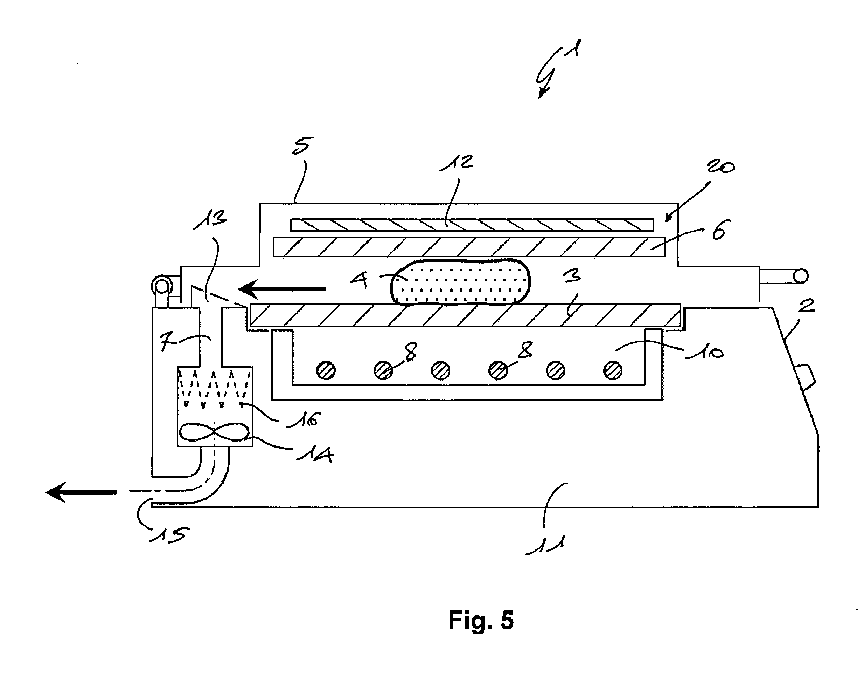

In a further preferred embodiment of the present invention, represented in figure 5, the base member 2, instead of the upper member 5, comprises the suction line 7 for collecting the cooking effluent produced by the food products 4. The base member 2 is provided also with the intake port 13, which preferably is arranged in a rear portion of the base member 2 where the upper member 5 movably engages the base member 2.

Preferably, the upper member 5 and the base member 2, when closed against each other, forms the cooking chamber 17 adapted to prevent the fumes from leaking outside the chamber itself and to convey the fumes to the intake port 13.

The intake fan assembly 14, which is fluidly connected to the suction line 7, is arranged preferably inside the base member 2.

The outlet port 15 can be provided in the outer casing of the base member 2 so as to directly discharge the fumes or to convey the fumes to an exhaust line to which the outlet port 13 is suitably connectable.

Also in this embodiment as the other described above, filtering device 16 can be provided and arranged, for example, upstream the fan assembly 14 between the latter and suction line 7.

Preferably, the second heating surface 6 is movably associated to the upper member 5 by means of at least a moving coupling 18 enabling the second heating surface 6 to move relative to the upper member 5, so as to be displaced into positions at different height from the first heating surface 3 in accordance with the size of the food products 4 to be cooked each time.

The moving coupling 18 is provided particularly in the embodiments, described above, wherein the upper member 2 and the base member 5 are adapted to close against each other so as to form the cooking chamber 17 enclosing the first heating surface 2, the second heating surface 6 and the food products 4 and adapted to retain the fumes.

It can be easily appreciated the upper member 5 can comprise the moving coupling 18 even if no cooking chamber is provided.

By means of the moving coupling 18, the second heating surface 6 is movable inside the cooking chamber 17 so that the second heating surface 6 is capable to fit the different height of the food product placed on the first heating surface 3.

Advantageously, when the upper member 5 is in the open inoperative condition, i.e. lifted from the base member 2, the second heating surface 6 is movable into an extraction position in which the latter is taken out or spaced from the upper member 2 so that the inner housing 19 of the upper member 2 adapted to contain the movable second heating surface 6 is accessible from the outside to be cleaned.

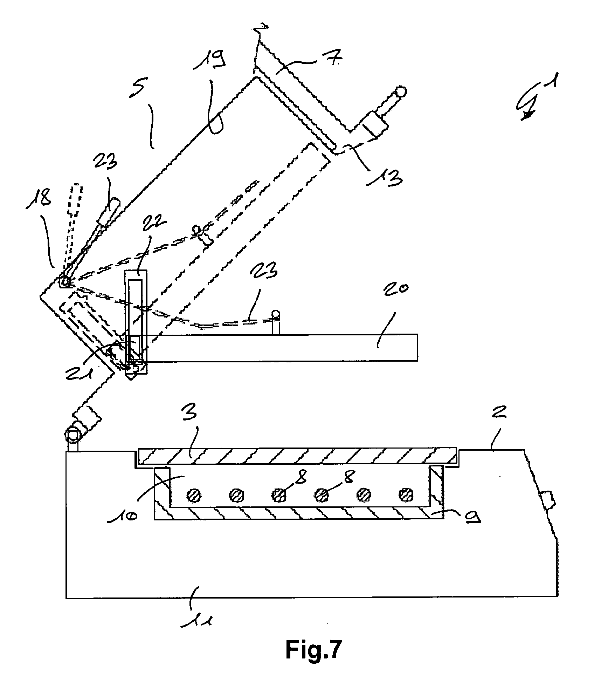

The upper member 5 substantially defines an internal portion or inner housing 19 wherein the second heating surface 6 is movably arranged to fit the various food product sizes. When the upper member 6 is lifted from the base member 2, the moving coupling 18 allows the second heating surface 6 to move outside the inner housing 19, as shown in figures 7, 9, 11, 13, so that the inner housing 19 is fully accessible to be cleaned.

Clearly, the second heating device 12 is associated to the second heating surface 6 so as to form a rigid and firmly joined assembly 20 movable to fit the various food product sizes and to be displaced to the extract position so that the internal portion 19 is accessible from outside to be cleaned as previously described.

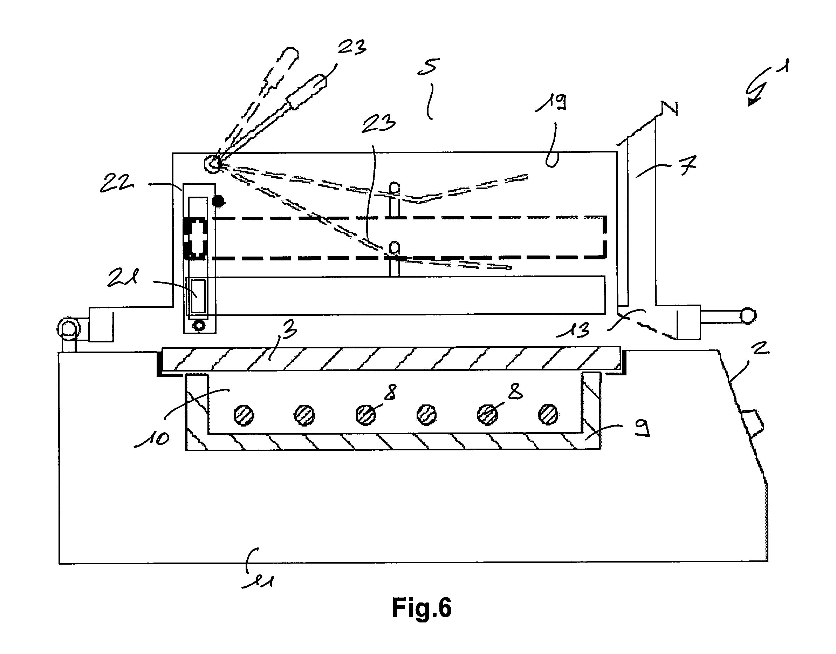

According to a first embodiment of the present invention, shown in figures 6, 7, the moving coupling 18 can comprises, for example, a sliding coupling for enabling the assembly 20 to move up and down relative to the upper member 5. The sliding coupling includes sliding arms 21 provided on the assembly 20 for slidably engaging respective guides 22 provided on the upper member 5.

As a result, when the upper member 5 is lowered, the second heating surface 6 is moved into contact with the corresponding portion of the food product to be cooked, thereby pressing it slightly due to the weight of assembly.

In the case that the so obtained pressing effect upon the food product proves to be too limited, i.e. inadequate, in order to ensure that the second heating surface 6 is able to automatically be brought or caused to adequately press against and firmly stabilize upon the upper portion of the food product, it is possible for such pressure to be increased through the application of elastic elements.

The guides 22 are pivoted to the upper member 5 so that a rotation of the guides, when the upper member 5 is in the open inoperative condition, causes the assembly 20 to be partially removed from the upper member 5 with the result that the inner housing 19 is accessible from outside to be cleaned.

Thank to such a rotation the assembly 20 comes to lie in the extract position wherein the second heating surface 6 and the associated second heating device 12 are taken out from the inner housing 19 of the upper member 5.

Further, the moving coupling 18 comprise a lever 23 rotatably associated to the upper member 5 and connected to the assembly 20.

The lever 23 is adapted to be operated by a user/operator for raising the assembly 20 up to a pre-determined height, so as to position it above the food product to be treated according at a desired distance therefrom.

The lever 23 is, also, adapted, to actuate the assembly 20 for causing the rotation of the guides 22 so that the assembly 20 is moved into the extraction position.

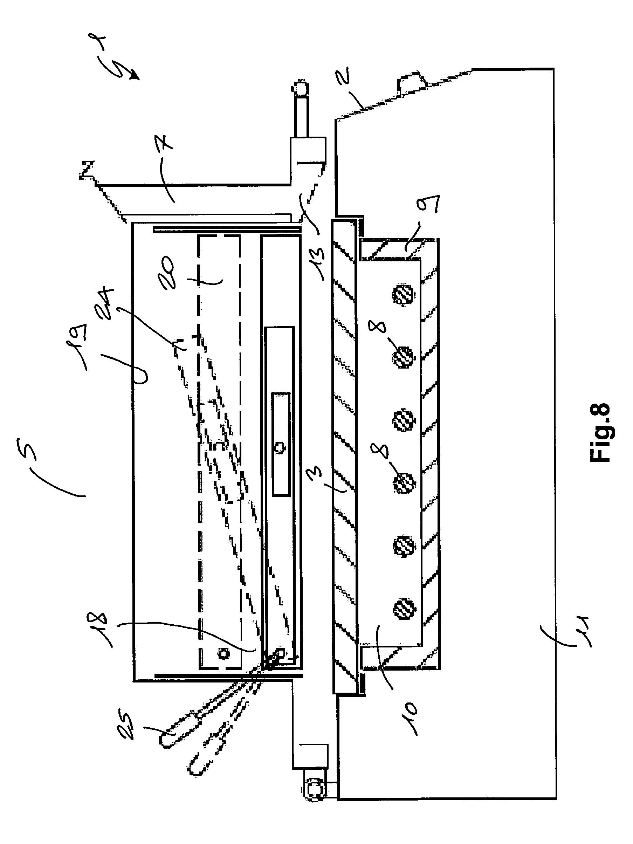

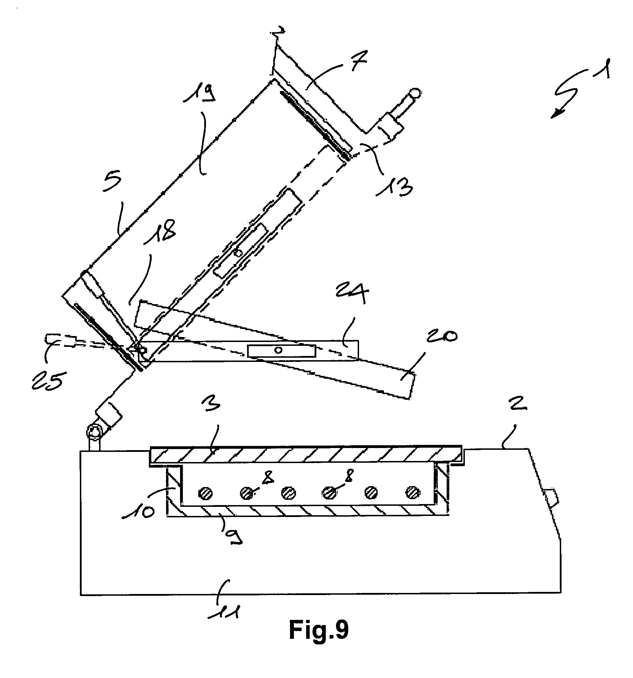

In a further embodiment, represented in figures 8, 9, the moving coupling 18 comprises a frame 24 pivoted to the upper member 5 and a lever arm 25 connected to the frame 24 and operable by the user for driving the frame 24 into rotation. The assembly 20 is in turn pivoted to the frame 24 so as to freely rotate with respect to the latter. By means of the lever arm 25 it is possible to lift the frame 24 and the assembly 20 according to the height of the food product to be cooked. The rotation of the assembly 20 with respect to the frame 24 enables the second heating surface 6 to better fit the size of the food product.

The lever arm 25 is adapted to rotate the frame 24 so that the assembly 20 is moved into the extraction position.

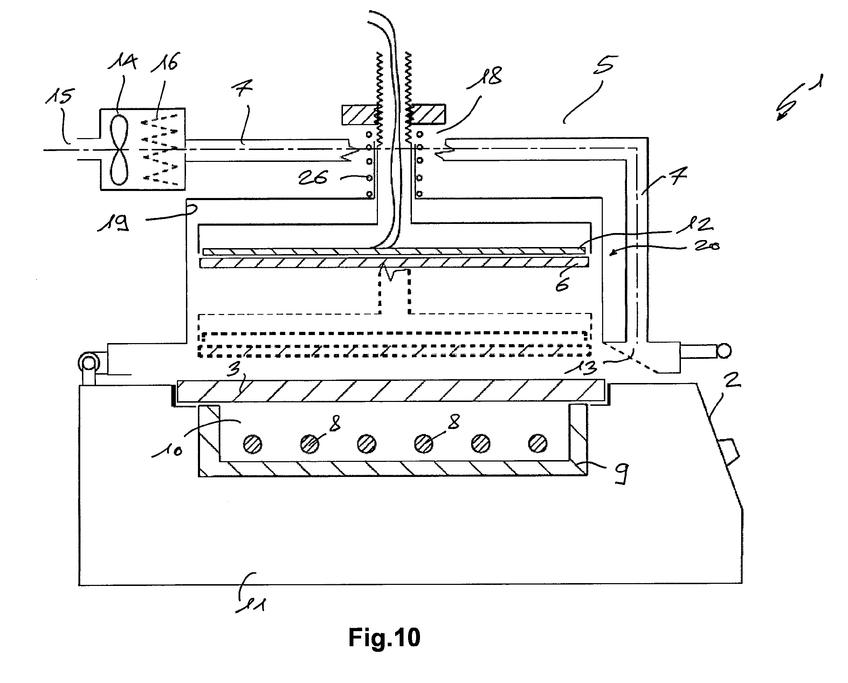

In a further embodiment of the present invention, shown in figures 10-13, the moving coupling 18 comprises a telescopic mechanism through which the assembly 20 is movably associated to the upper member 5 to move into positions at different height from the second heating surface 6 in accordance with the varying size of the food product to be cooked.

A helical spring 26 can be provided to bias and stabilize the assembly 20 and hence the first heating surface 3 against the food product.

When the upper member 5 is raised from the base member 2, the telescopic mechanism enables the assembly 20 to move into the extraction position, wherein the latter is taken out or partially removed from the upper member 5, so that the inner housing 19 is accessible from outside to be cleaned.

Conclusively, it can therefore be stated that apparatus for cooking food products on both sides thereof according to the present invention is capable of efficiently and effectively cooking the food products involved, without affecting the taste and flavour thereof.

A particular advantage of the apparatus according to the present invention is the ability thereof to collect the fumes generated during cooking without the need for a conventional fume extraction device to be installed over the apparatus.

Another advantage consists in the fact that the apparatus is capable of removing the humidity from the food products, via the suction line, in order to get food products crispier and improve their quality.

Another advantage of the apparatus according to the present invention derives from the ability thereof to enable most variously sized food products to be cooked there, thanks to the first heating surface thereof being adjustable.

Another advantage of the apparatus according to the present invention derives from tha fact that the moving coupling render the internal portion of the upper member accessibile from outside to be cleaned.

## Claims

1. An apparatus for cooking food products on both sides thereof, including:
a base member (2) associated to a first heating surface (3) adapted to support food products (4) to be cooked, an upper member (5) associated to a second heating surface (6) and movable relative to said base member (2) so that, when the upper member (5) is moved towards the base member (2), the second heating surface (6) comes to lie opposite to the first heating surface (3) so as to enclose the food product (4) therebetween, a suction line (7) fluidly connected to an air circulation device (14) and adapted to collect the fumes arising during cooking, and
a cooking chamber (17), formed by said base member (2) and said upper member (5) when closed against each other, is adapted to retain the fumes, odours and cooking effluent produced during cooking therewithin, so as to prevent them from leaking outside, and to convey the fumes to the suction line (7).

2. An apparatus according to claim 1, wherein said suction line (7) comprises at least an intake port (13) for sucking the cooking fumes.

3. An apparatus according to claim 2, comprising an intake fan assembly (14) fluidly connected to the suction line (7).

4. An apparatus according to claim 2 or 3, wherein an outlet port (15) is provided downstream the fan assembly (14) so as to directly discharge the fumes or to convey the fumes to an exhaust line.

5. An apparatus according to any of the preceding claims, comprising a filtering device (16) adapted to filter the cooking effluent so as to trap the grease and dirt transported by the effluent.

6. An apparatus according to claim 5, wherein said filtering device (16) is arranged upstream the fan assembly (14).

7. An apparatus according to any of the preceding claims, wherein the second heating surface (6) is movably associated to the upper member (5) by means of a moving coupling (18) enabling the second heating surface (8) to move relative to the upper member (7), as to be displaced into positions at different height from the first heating surface (3) in accordance with the size of the food products to be cooked each time.

8. An apparatus according to claim 7, wherein, when the upper member (5) is in an open inoperative condition, said moving coupling (18) enables the second heating surface (6) to move into an extraction position in which the latter is taken out or spaced from the upper member (5) so that an inner housing (19) of the upper member (5) adapted to contain the second heating surface (6) is accessible from the outside to be cleaned.

9. An apparatus according to claims 7 or 8, wherein said the moving coupling (18) comprises a sliding coupling for enabling the second heating surface (6) to move up and down relative to the upper member (5), said sliding coupling includes sliding arms (21) associated to the second heating surface (6) for slidably engaging respective guides (22) provided on the upper member (5).

10. An apparatus according to claim 9, wherein said guides (22) are pivoted to the upper member (5) so that a rotation of the guides (22), when the upper member (5) is in the open inoperative condition, causes the second heating surface (6) to be displaced into said extraction position.

11. An apparatus according to claim 10, wherein the moving coupling (18) comprise a lever (23) rotatably associated to the upper member (5) and connected to the second heating surface (6), the lever (23) is adapted to actuate the second heating surface (6) for causing the rotation of the guides (22) so that the second heating surface (6) is moved into the extraction position.

12. An apparatus according to claim 8, wherein the moving coupling (18) comprises a frame (24) pivoted to the upper member (5) and a lever arm (25) connected to the frame (24) and operable by the user for driving the frame (24) into rotation, the second heating surface (6) is in turn pivoted to the frame (24) so as to freely rotate with respect to the latter, said lever arm (25) is adapted to rotate the frame (24) so that the second heating surface (6) is moved into the extraction position.

13. An apparatus according to claim 8, wherein the moving coupling (18) comprises a telescopic mechanism through which the second heating surface (6) is movably associated to the upper member (5) to move into positions at different height from the first heating surface (3) in accordance with the varying size of the food products (4) to be cooked, when the upper member (5) is raised from the base member (2), i.e. in the open inoperative condition, the telescopic mechanism enables the second heating surface (6) to move into the extraction position.

14. An apparatus according to any of the preceding claims, wherein the upper member (5) comprises a heating device (12) associated to the second heating surface (6) so as to form a rigid and firmly joined assembly (20) movable to fit the various food product sizes and to be displaced to the extract position so that the inner housing (19) is accessible from outside to be cleaned.

15. An apparatus according to any of the preceding claims, wherein a heating device (8) is housed within the base member (2) and arranged underneath the first heating surface (3) for heating the latter, the base member (2) comprise a partition element (9) made of thermally insulating material which is arranged so as to extend in a position below the heating device (8) for thermally insulating the electric/electronic components housed in the base member (2) from the heating device (8).

16. An apparatus according to any of the preceding claims, wherein temperature sensors are provided in contact to the bottom face (3a) of the first heating surface (3), i.e. in contact to the face opposite to the one adapted to support the food, for detecting the temperature variations, which are generated by the food when it is placed on the hot first heating surface (3) in order to maintain the cooking temperature.

## Patentansprüche

1. Gerät zum beidseitigen Kochen von Lebensmitteln, umfassend:
ein Grundelement (2), das mit einer ersten Heizfläche (3) verknüpft ist, die geeignet ist, um zu kochende Lebensmittel (4) zu tragen, ein oberes Element (5), das mit einer zweiten Heizfläche (6) verknüpft ist und mit Bezug auf das Grundelement (2) derart bewegbar ist, dass wenn das obere Element (5) in Richtung auf das Grundelement (2) bewegt wird, die zweite Heizfläche (6) gegenüber der ersten Heizfläche (3) zu liegen kommt, um die Lebensmittel (4) dazwischen einzuschließen, eine Absaugleitung (7), die fluidtechnisch mit einer Luftumwälzvorrichtung (14) verbunden ist und geeignet ist, um die Dünste aufzufangen, die beim Kochen entstehen, und
eine Kochkammer (17), die aus dem Grundelement (2) und dem oberen Element (5) gebildet wird, wenn sie gegeneinander geschlossen werden, und geeignet ist, um die Dünste, die Gerüche und das Kochabwasser zurückzuhalten, die während des Kochens darin erzeugt werden, um zu verhindern, dass sie nach außen entweichen, und um die Dünste der Absaugleitung (7) zuzuführen.

2. Gerät nach Anspruch 1, wobei die Absaugleitung (7) mindestens einen Einlassschlitz (13) zum Absaugen der Kochdünste umfasst.

3. Gerät nach Anspruch 2, umfassend eine Einlassgebläsebaugruppe (14), die fluidtechnisch mit der Absaugleitung (7) verbunden ist.

4. Gerät nach Anspruch 2 oder 3, wobei eine Auslassöffnung (15) stromabwärts von der Gebläsebaugruppe (14) bereitgestellt wird, um die Dünste direkt abzulassen oder um die Dünste einer Ablassleitung zuzuführen.

5. Gerät nach einem der vorhergehenden Ansprüche, umfassend eine Filtervorrichtung (16), die geeignet ist, um das Kochabwasser zu filtern, um das Fett und den Schmutz aufzufangen, die von dem Abwasser transportiert werden.

6. Gerät nach Anspruch 5, wobei die Filtervorrichtung (16) stromaufwärts von der Gebläsebaugruppe (14) angeordnet ist.

7. Gerät nach einem der vorhergehenden Ansprüche, wobei die zweite Heizfläche (6) bewegbar mit dem oberen Element (5) anhand einer beweglichen Kopplung (18) verknüpft ist, die es der zweiten Heizfläche (8) ermöglicht, sich mit Bezug auf das obere Element (7) zu bewegen, um gemäß der Größe der jeweils zu kochenden Lebensmittel in Positionen auf verschiedenen Höhen gegenüber der ersten Heizfläche (3) verschoben zu werden.

8. Gerät nach Anspruch 7, wobei, wenn sich das obere Element (5) in einem offenen untätigen Zustand befindet, es die bewegliche Kopplung (18) der zweiten Heizfläche (6) ermöglicht, sich in eine Auszugsposition zu bewegen, in der diese aus dem oberen Element (5) herausgenommen oder davon beabstandet wird, so dass ein Innengehäuse (19) des oberen Elements (5), das geeignet ist, um die zweite Heizfläche (6) zu enthalten, von außen zugänglich ist, um gereinigt zu werden.

9. Gerät nach Anspruch 7 oder 8, wobei die bewegliche Kopplung (18) eine Schiebekopplung umfasst, um es der zweiten Heizfläche (6) zu ermöglichen, sich im Verhältnis zu dem oberen Element (5) nach oben und nach unten zu bewegen, wobei die Schiebekopplung Schiebearme (21) umfasst, die mit der zweiten Heizfläche (6) verknüpft sind, um schiebend in jeweilige Führungen (22) einzugreifen, die auf dem oberen Element (5) bereitgestellt werden.

10. Gerät nach Anspruch 9, wobei die Führungen (22) an dem oberen Element (5) schwenkbar sind, so dass eine Drehung der Führungen (22), wenn sich das obere Element (5) in dem geöffneten untätigen Zustand befindet, bewirkt, dass die zweite Heizfläche (6) in die Auszugsposition verschoben wird.

11. Gerät nach Anspruch 10, wobei die bewegliche Kopplung (18) einen Hebel (23) umfasst, der drehbar mit dem oberen Element (5) verknüpft ist und mit der zweiten Heizfläche (6) verbunden ist, wobei der Hebel (23) geeignet ist, um die zweite Heizfläche (6) zu betätigen, um die Drehung der Führungen (22) zu bewirken, so dass die zweite Heizfläche (6) in die Auszugsposition bewegt wird.

12. Gerät nach Anspruch 8, wobei die bewegliche Kopplung (18) einen Rahmen (24), der an dem oberen Element (5) schwenkbar ist, und einen Hebelarm (25), der mit dem Rahmen (24) verbunden ist und durch den Benutzer betätigt werden kann, um den Rahmen (24) in Drehung zu versetzen, umfasst, wobei die zweite Heizfläche (6) wiederum an dem Rahmen (24) schwenkbar ist, um sich im Verhältnis dazu frei zu drehen, wobei der Hebelarm (25) geeignet ist, um den Rahmen (24) derart zu drehen, dass die zweite Heizfläche (6) in die Auszugsposition bewegt wird.

13. Gerät nach Anspruch 8, wobei die bewegliche Kopplung (18) einen Teleskopmechanismus umfasst, über den die zweite Heizfläche (6) bewegbar mit dem oberen Element (5) verknüpft ist, um sich gemäß der unterschiedlichen Größe der zu kochenden Lebensmittel (4) in Positionen auf verschiedenen Höhen gegenüber der ersten Heizfläche (3) zu bewegen, wenn das obere Element (5) von dem Grundelement (2) angehoben wird, d.h. in dem offenen, untätigen Zustand, ermöglicht es der Teleskopmechanismus der zweiten Heizfläche (6), sich in die Auszugsposition zu bewegen.

14. Gerät nach einem der vorhergehenden Ansprüche, wobei das obere Element (5) eine Heizvorrichtung (12) umfasst, die mit der zweiten Heizfläche (6) verknüpft ist, um eine starre und fest zusammengefügte Baugruppe (20) zu bilden, die bewegbar ist, um sich an die diversen Lebensmittelgrößen anzupassen und um in die Auszugsposition verschoben zu werden, damit das innere Gehäuse (19) von außen zugänglich ist, um gereinigt zu werden.

15. Gerät nach einem der vorhergehenden Ansprüche, wobei eine Heizvorrichtung (8) in dem Grundelement (2) untergebracht ist und unterhalb der ersten Heizfläche (3) zum Beheizen derselben angeordnet ist, wobei das Grundelement (2) ein Trennelement (9) umfasst, das aus einem thermisch isolierenden Material besteht, das angeordnet ist, um sich in eine Position unter der Heizvorrichtung (8) zu erstrecken, um die elektrischen/ elektronischen Bauteile, die in dem Grundelement (2) untergebracht sind, von der Heizvorrichtung (8) thermisch zu isolieren.

16. Gerät nach einem der vorhergehenden Ansprüche, wobei Temperatursensoren in Kontakt mit der unteren Seite (3a) der ersten Heizfläche (3) bereitgestellt werden, d.h. in Kontakt mit der Seite gegenüber derjenigen, die geeignet ist, um die Lebensmittel zu tragen, um die Temperaturvariationen zu ermitteln, die von den Lebensmitteln generiert werden, wenn sie auf die heiße erste Heizfläche (3) gelegt werden, um die Kochtemperatur beizubehalten.

## Revendications

1. Appareil de cuisson de produits alimentaires des deux côtés de ceux-ci, comprenant :
un élément de base (2) associé à une première surface chauffante (3) apte à supporter des produits alimentaires (4) devant être cuits, un élément supérieur (5) associé à une seconde surface chauffante (6) et mobile par rapport audit élément de base (2) de telle sorte que, lorsque l'élément supérieur (5) est déplacé vers l'élément de base (2), la seconde surface chauffante (6) vient à s'étendre à l'opposé de la première surface chauffante (3) de façon à enfermer le produit alimentaire (4) entre elles, un conduit d'aspiration (7) relié fluidiquement à un dispositif de circulation d'air (14) et apte à collecter les fumées survenant pendant la cuisson,
et
une chambre de cuisson (17), formée par ledit élément de base (2) et ledit élément supérieur (5) lorsqu'ils sont fermés l'un contre l'autre, est apte à retenir à l'intérieur de celle-ci les fumées, odeurs et effluent de cuisson produits pendant la cuisson, de façon à les empêcher de fuir à l'extérieur, et à transporter les fumées jusqu'au conduit d'aspiration (7).

2. Appareil selon la revendication 1, dans lequel ledit conduit d'aspiration (7) comprend au moins un orifice d'admission (13) pour aspirer les fumées de cuisson.

3. Appareil selon la revendication 2, comprenant un ensemble ventilateur d'admission (14) relié fluidiquement au conduit d'aspiration (7).

4. Appareil selon l'une des revendications 2 ou 3, dans lequel un orifice de sortie (15) est prévu en aval de l'ensemble ventilateur (14) de façon à décharger directement les fumées ou à transporter les fumées jusqu'à un conduit d'échappement.

5. Appareil selon l'une quelconque des revendications précédentes, comprenant un dispositif de filtration (16) apte à filtrer l'effluent de cuisson de façon à piéger la graisse et les saletés transportées par l'effluent.

6. Appareil selon la revendication 5, dans lequel ledit dispositif de filtration (16) est agencé en amont de l'ensemble ventilateur (14).

7. Appareil selon l'une quelconque des revendications précédentes, dans lequel la seconde surface chauffante (6) est associée de façon mobile à l'élément supérieur (5) au moyen d'un accouplement mobile (18) permettant à la seconde surface chauffante (8) de se déplacer par rapport à l'élément supérieur (7), de façon à être déplacée à chaque fois dans des positions à une hauteur différente vis-à-vis de la première surface chauffante (3) en fonction de la dimension des produits alimentaires devant être cuits.

8. Appareil selon la revendication 7, dans lequel, lorsque l'élément supérieur (5) est dans un état inopérant ouvert, ledit accouplement mobile (18) permet à la seconde surface chauffante (6) de se déplacer dans une position d'extraction dans laquelle cette dernière est extraite ou espacée de l'élément supérieur (5) de telle sorte qu'un logement intérieur (19) de l'élément supérieur (5) apte à contenir la seconde surface chauffante (6) est accessible depuis l'extérieur pour être nettoyé.

9. Appareil selon l'une des revendications 7 ou 8, dans lequel ledit accouplement mobile (18) comprend un accouplement coulissant pour permettre à la seconde surface chauffante (6) de se déplacer vers le haut et vers le bas par rapport à l'élément supérieur (5), ledit accouplement coulissant comprend des bras coulissants (21) associés à la seconde surface chauffante (6) pour engager de façon coulissante des guides respectifs (22) prévus sur l'élément supérieur (5).

10. Appareil selon la revendication 9, dans lequel lesdits guides (22) sont articulés à l'élément supérieur (5) de telle sorte qu'une rotation des guides (22), lorsque l'élément supérieur (5) est dans l'état inopérant ouvert, amène la seconde surface chauffante (6) à être déplacée dans ladite position d'extraction.

11. Appareil selon la revendication 10, dans lequel l'accouplement mobile (18) comprend un levier (23) associé de façon rotative à l'élément supérieur (5) et relié à la seconde surface chauffante (6), le levier (23) est apte à actionner la seconde surface chauffante (6) pour entraîner la rotation des guides (22) de telle sorte que la seconde surface chauffante (6) est déplacée dans la position d'extraction.

12. Appareil selon la revendication 8, dans lequel l'accouplement mobile (18) comprend un cadre (24) articulé à l'élément supérieur (5) et un bras de levier (25) relié au cadre (24) et actionnable par l'utilisateur pour entraîner le cadre (24) en rotation, la seconde surface chauffante (6) est à son tour articulée au cadre (24) de façon à tourner librement par rapport à ce dernier, ledit bras de levier (25) est apte à faire tourner le cadre (24) de telle sorte que la seconde surface chauffante (6) est déplacée dans la position d'extraction.

13. Appareil selon la revendication 8, dans lequel l'accouplement mobile (18) comprend un mécanisme télescopique à travers lequel la seconde surface chauffante (6) est associée de façon mobile à l'élément supérieur (5) pour se déplacer dans des positions à une hauteur différente vis-à-vis de la première surface chauffante (3) en fonction de la dimension variable des produits alimentaires (4) devant être cuits, lorsque l'élément supérieur (5) est élevé à partir de l'élément de base (2), c'est-à-dire dans l'état inopérant ouvert, le mécanisme télescopique permet à la seconde surface chauffante (6) de se déplacer dans la position d'extraction.

14. Appareil selon l'une quelconque des revendications précédentes, dans lequel l'élément supérieur (5) comprend un dispositif de chauffage (12) associé à la seconde surface chauffante (6) de façon à former un ensemble rigide et fermement réuni (20) mobile pour s'adapter à diverses dimensions de produit alimentaire et pour être déplacé dans la position d'extraction de telle sorte que le logement intérieur (19) est accessible depuis l'extérieur pour être nettoyé.

15. Appareil selon l'une quelconque des revendications précédentes, dans lequel un dispositif de chauffage (8) est reçu dans l'élément de base (2) et agencé sous la première surface chauffante (3) pour chauffer cette dernière, l'élément de base (2) comprend un élément de séparation (9) fait de matériau thermiquement isolant qui est agencé de façon à s'étendre dans une position au-dessous du dispositif de chauffage (8) pour isoler thermiquement du dispositif de chauffage (8) les composants électriques/électroniques reçus dans l'élément de base (2).

16. Appareil selon l'une quelconque des revendications précédentes, dans lequel des capteurs de température sont disposés en contact avec la face inférieure (3a) de la première surface chauffante (3), c'est-à-dire en contact avec la face opposée à celle apte à supporter l'aliment, pour détecter les variations de température, qui sont générées par l'aliment lorsqu'il est placé sur la première surface chauffante (3) chaude, afin de maintenir la température de cuisson.
